# EUROPEAN PATENT SPECIFICATION

(11) **EP 4 207 943 B1**
(45) Date of publication and mention of the grant of the patent: **20.11.2024**
(21) Application number: 21218340.4
(22) Date of filing: 30.12.2021
(51) Int. Cl.: H05B 6/06

(54) **INDUCTION COOKTOP AND METHOD FOR AN INDUCTION COOKTOP**
INDUKTIONSKOCHFELD UND VERFAHREN FÜR EIN INDUKTIONSKOCHFELD
PLAQUE DE CUISSON PAR INDUCTION ET PROCÉDÉ POUR UNE PLAQUE DE CUISSON PAR INDUCTION

(43) Date of publication of application: 05.07.2023
(73) Proprietor: SABAF S.p.A., 25035 Ospitaletto (BS) (IT)
(72) Inventor: PASTORE, Cristiano, 25035 OSPITALETTO (BS) (IT); RESTIVO, Salvatore, 25035 OSPITALETTO (BS) (IT)
(74) Representative: Studio Torta S.p.A.

(56) References cited:
- EP-A1- 3 562 267
- WO-A1-2010/069788
- FR-A1- 2 863 039
- US-A1- 2021 029 787

## Description

### TECHNICAL FIELD

The present invention relates to an induction cooktop and method for detecting a pan over an induction cooktop for an induction cooktop.

### BACKGROUND

As it is known, an induction cooktop comprises a rectifier, a DC bus and one or more high frequency switching converters, and is configured to energize induction heaters (also referred to as "pancake coils"). One major issue involves pan detection functionality of a high frequency switching converter supplying multiple inductors through sharing relays.

The high frequency switching converter can be implemented in the form of a Half-Bridge inverter that is one of the most common inverter topologies used in the induction cooktop industry, as it is simple and reliable. However, this particular topology is not among the most cost effective, as it needs two IGBTs, two resonant capacitors, two snubber capacitors and a high voltage, high side gate driver. In order to mitigate the cost of the Half-Bridge inverter, especially in conjunction with cooktops with a large number of inductors to be energized, a technique consists in sharing a Half-Bridge inverter among multiple inductors, using electro mechanical switches or relays.

In general, in a shared Half-Bridge inverter, the average power delivered to an inductor is proportional to the time the corresponding sharing switch/relay is closed. In other words, the sharing switch Duty Cycle is one of the control variables for power regulation. As a consequence, whenever a given inductor is not required to deliver power to the overlying pan, the corresponding switch will be kept open, resulting in the disadvantage of not being possible to perform the so called "pan-detection" (i.e to test for pan presence above the corresponding inductor) as per the known methods.

A solution is disclosed in EP2380398A1 (Hernandez Blasco et Al.). This document proposes to use two ways relays (known as SPDT relays) in order to connect coils not being supplied by main generator to an auxiliary detection circuit, which is different from the main generator.

A disadvantage of this technique is that it leads to an unnecessary complication of the device.

WO 2010/069788 A1 discloses an induction cooktop with a pan detection according to the prior art.

### SUMMARY OF THE INVENTION

It is an aim of the present invention to provide an induction cooktop and a method for an induction cooktop that allow the above limitations to be overcome or at least be reduced.

According to the present invention there is provided an induction cooktop according to one of the previous claims.

The technique herein described is particularly advantageous because the cooktop, comprising the shared high frequency switching converter, is able to perform periodic pan detection scans on all the induction heaters, irrespective of the closed or open state of the corresponding main switches.

The device and method here described are not relying upon periodic and temporary activation of the sharing relays as in the disclosed prior art, thus eliminating the annoying "click" associated with their switching and greatly reducing the wear and tear of the mechanical parts as well as of electrical contacts.

Further, according to the present invention the cooktop is able to perform the pan detection by using the resonant circuits and hence without using a further auxiliary detection circuit as in the cited prior art.

Another advantage of the present invention resides in that the generators do not need to be temporarily disabled during the relay switching process to avoid electrical spark and hence provides a reduction of the electromagnetic noise and premature wear of the electrical contacts with respect to the prior art. Consequential advantages of the present invention are also a smoother power delivery, and lower flicker emission of the appliance.

### BRIEF DESCRIPTION OF THE DRAWINGS

The present invention will now be described with reference to the accompanying drawings, which show a number of non-limitative embodiments thereof, in which:
- figure 1 is a simplified block diagram of an induction cooktop in accordance with an embodiment of the present invention;
- figure 2 is an embodiment of a circuit diagram of components of the induction cooktop of figure 1;
- figure 3 is a graph showing step response of the voltage across the resonant capacitors of the induction cooktop of figure 1, in response of the procedure carried out as per the present invention;
- figure 4 is a circuit diagram of a detail of the induction cooktop, with parts removed for sake of clarity, in accordance with a non-limiting embodiment of the present invention; and
- figure 5 is another embodiment of a circuit diagram of components of the induction cooktop in accordance with another non-limiting embodiment of the present invention.

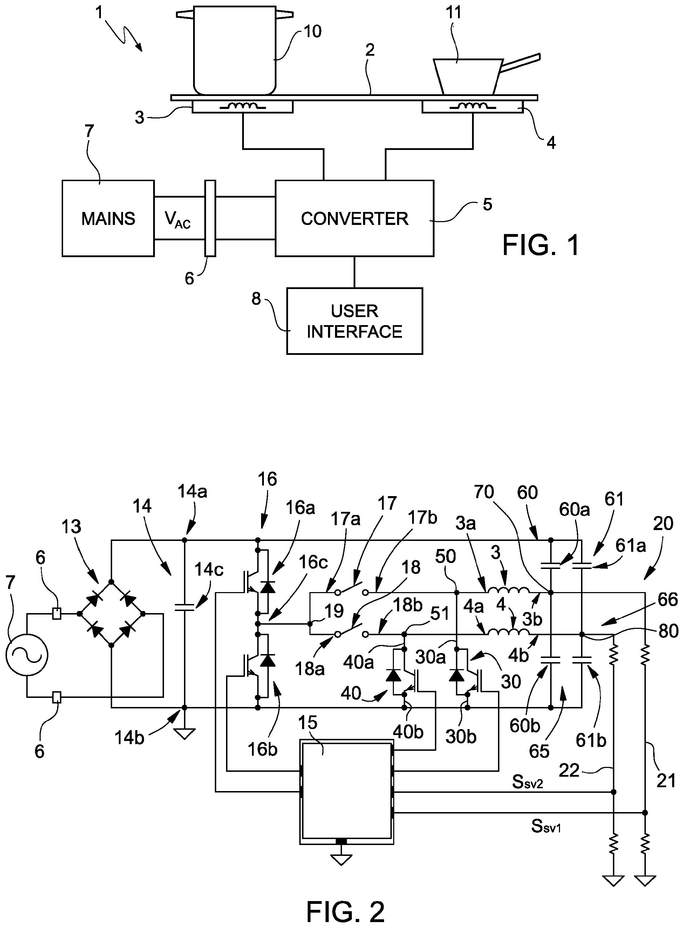

With reference to figure 1, an induction cooktop is designated as a whole by number 1 and comprises a glass-ceramic plate 2, at least a first induction heater 3 and a second induction heater 4 at respective cooking zones below the plate 2, a converter 5, and connection elements 6 configured to be coupled to a supply line (mains) 7.

The first induction heater 3 and the second induction heater 4 are inductors.

The induction cooktop 1 is configured to be coupled to the supply line (mains) 7, to receive an AC supply voltage V_{AC} from the supply line 7 and to energize at least one of the induction heaters 3, 4.

In embodiments not shown, an induction cooktop may include any number of induction heaters greater than two.

A user interface 8 allows users to select power levels, preferably average power levels, to be delivered to the induction heaters 3, 4.

In use, induction cooking pans 10, 11 are arranged at the cooking zones in positions substantially overlaying to respective induction heaters 3, 4. When the induction heaters 3, 4 are energized, eddy currents are induced in the induction cooking pans 10, 11, which are thus heated.

In accordance with a non-limiting embodiment of the present invention illustrated in figure 2, the converter 5 comprises a rectifier 13; a DC bus 14; a control unit 15; a high frequency switching converter 16; a first main switch 17; a second main switch 18; a first auxiliary switch 30; a second auxiliary switch 40; a first resonant capacitor assembly 60; a second resonant capacitor assembly 61; and a sensing assembly 20.

In an embodiment not shown, the rectifier and the DC bus can be replaced by a battery that provides a DC voltage.

The rectifier 13 is coupled to the connecting element 6 to receive an alternating voltage from the mains 7, and to convert the alternating voltage from the mains to a rectified voltage to be delivered to the DC bus 14.

The DC bus 14 comprises a capacitor 14c connected to the outputs of the rectifier 13 to smooth the rectified voltage from the rectifier 13.

Further, the DC bus 14 comprises an upper rail 14a and a lower rail 14b, each of them connected to one respective terminals of the capacitor 14c.

The rectifier 13 and the DC bus 14 supply a DC voltage to the switching converter 16 through the upper rail 14a and the lower rail 14b of the DC bus 14.

In the embodiment show in figure 2, the switching converter 16 is a half-bridge inverter. It is to be intended that the switching converter 16 can be other type of circuit able to convert a DC voltage or current or a rectified voltage or current into an alternating voltage.

In particular, the switching converter 16 comprises a converter switch 16a and a converter switch 16b that are operated to convert a DC voltage from the DC bus 14 into an alternating voltage, preferably a high frequency alternating voltage. The converter switch 16a, 16b may be any suitable kind of power switch, in particular any semiconductor switch, preferably high frequency semiconductor switch, for example IGBTs or power MOSFETs.

In particular, the first auxiliary switch 30 is distinct from the converter switches 16a, 16b; and the second auxiliary switch 40 is distinct from the converter switches 16a, 16b.

In particular, the control unit 15 is coupled to the switching converter 16 and controls the converter switches 16a, 16b to energize the first induction heater 3 and/or second induction heater 4 and deliver power to the cooking pans 10, 11 in accordance with user's requests.

The switching converter 16 is coupled and is controlled by the control unit 15 to supply a high frequency voltage and is shared by the first induction heater 3 and the second induction heater 4.

In particular according to the user's requests, the switching converter 16 can be connected to both the induction heaters 3, 4 and hence energizes in the same time both the induction heaters 3, 4, or can be connected to the first induction heater 3 or to the second induction heater 4.

In the embodiment of figure 2, in particular, the first induction heater 3 and the second induction heater 4 are selectively connectable to an output 16c of the switching converter 16 through the first main switch 17 and the second main switch 18, respectively, which are operated by the control unit 15 through control signals, not shown in figure 2. Therefore, the first induction heater 3 and the second induction heater 4 are selectively energized when the first main switch 17 is closed and when the second main switch 18 is closed, respectively.

The first auxiliary switch 30 and the second auxiliary switch 40 are auxiliary excitation switches operable to selectively close a circuit comprising respectively the resonant capacitors 60b or 61b and the induction heaters 3 or 4 while they are not energized by the switching converter 16, to sense a respective electric parameter related to the first or second induction heaters 3, 4.

In an embodiment, in particular, the first main switch 17 and the first auxiliary switch 30 are discrete components with distinct terminals or pins; in particular, terminals of the first main switch 17 are distinct from terminals of the first auxiliary switch 30. Specifically, the first main switch 17 has a first terminal 17a connected to the output 16c of the switching converter 16 and a second terminal 17b connected to a first terminal 3a the first induction heater 3. The first auxiliary switch 30 has a first terminal 30a connected to the first terminal 3a of the first induction heater 3 and a second terminal 30b connected to the DC bus 14 preferably directly and permanently, e.g. through the lower rail 14b.

In another embodiment not shown, the second terminal 30b is connected to the DC bus 14, preferably directly and permanently e.g. through the upper rail 14a.

The first main switch 17 and the first auxiliary switch 30 may be of different type.

In a non-limiting embodiment of the present invention, the first main switch 17 is a single pole single throw relay, in particular electromechanical relay, and the first auxiliary switch 30 is a semiconductor power switch, for example a power IGBT or a power MOSFET.

Likewise, the second main switch 18 and the second auxiliary switch 40 are two distinct switches with distinct terminals; in particular, terminals of the second main switch 18 are distinct from the terminals of the second auxiliary switch 40. Specifically, the second main switch 18 and has a first terminal 18a connected to the output 16c of the switching converter 16 and a second terminal 18b connected to a first terminal 4a of the second induction heater 4. The second auxiliary switch 40 has a first terminal 40a connected to the first terminal 4a of the second induction heater 4 and a second terminal 40b connected to the DC bus 14, preferably directly and permanently e.g. through the lower rail 14b.

In another embodiment not shown, the second terminal 40b is connected to the DC bus 14, preferably directly and permanently e.g. through the upper rail 14a.

The second main switch 18 and the second auxiliary switch 40 may be of different type.

In a non-limiting embodiment of the present invention, the second main switch 18 is a single pole single throw relay and the second auxiliary switch 40 is a semiconductor power switch, for example a power IGBT or a power MOSFET.

In the embodiments not shown, the switching converter may be shared by more than two induction heaters, each provided with two switches, i.e. a main switch for selectively coupling the respective induction heater to the switching converter, preferably to the output 16c of the switching converter 16, and an auxiliary switch for selectively coupling the induction heater to the DC bus 14, preferably directly to the lower rail 14b. Further, in said embodiment for each induction heater the cooktop comprising a resonant capacitor assembly connected to the respective induction heater and to the DC bus 14.

The first main switch 17 and the second main switch 18 provide two current different paths from the switching converter 16 to the first induction heater 3 and to the second induction heater 4, respectively.

The first resonant capacitor assembly 60 comprises two capacitors 60a and 60b, having respective first terminals connected to the upper rail 14a and to the lower rail 14b, respectively, and second terminals connected in common to a second terminal 3b of the first induction heater 3 in a node 70. Preferably, the first terminals of the capacitors 60a and 60b are directly and permanently connected to the upper rail 14a and to the lower rail 14b, respectively.

Further, the capacitor 60b is connected, preferably directly and permanently, to the second terminal 30b of the first auxiliary switch 30, in particular the first terminal of the capacitor 30b is connected to the second terminal 30b of the first auxiliary switch 30.

In particular, capacitors 60a and 60b are configured to operate as resonant capacitors.

Hence, whenever the first induction heater 3 is un-energized, each of the two capacitor 60a and 60b is charged to a respective determined voltage.

In a preferred embodiment, the two capacitors 60a and 60b have the same capacitance value and, whenever the first induction heater 3 is un-energized, each of the two capacitors 60a and 60b is charged to a voltage that is half the voltage of the DC bus 14.

In an embodiment not shown, the capacitor 60a may be replaced by a resistor having the function to charge the capacitor 60b.

The second resonant capacitor assembly 61 comprises two capacitor 61a and 61b, having respective first terminals connected to the upper rail 14a and to the lower rail 14b, respectively, and second terminals connected in common to a second terminal 4b of the induction heater 4 in a node 80. Preferably, the first terminals of the capacitors 61a and 61b are directly and permanently connected respectively to the upper rail 14a and to the lower rail 14b.

Further, the capacitor 61b is connected, preferably directly and permanently, to the second terminal 40b of the second auxiliary switch 40, in particular the first terminal of the capacitor 61b is connected to the second terminal 30b of the second auxiliary switch 40.

In particular, capacitors 61a and 61b are configured to operate as resonant capacitors.

Hence, whenever the induction heater 4 is un-energized, each of the two capacitor 61a and 61b is charged to a determined voltage.

In a preferred embodiment, the two capacitors 61a and 61b have the same capacitance value and, whenever the induction heater 4 is un-energized, each of the two capacitors 61a and 61b is charged to a voltage that is half the voltage of the DC bus 14.

In an embodiment not shown, the capacitor 61a may be replaced by a resistor having the function to charge the capacitor 61b.

The first induction heater 3 and the first resonant capacitor assembly 60 form a first resonant circuit 65.

The second induction heater 4 and the second resonant capacitors assembly 61 form a second resonant circuit 66.

The first resonant circuit 65 and a second resonant circuit 66 may be driven by the switching converter 16.

As mentioned above, in use, the switching converter 16 feeds the first induction heater 3 and/or the second induction heater 4 according to the open or closed position of the main switches 17 and 18. Hence, the switching converter 16 is shared between the first induction heater 3 and second induction heater 4. Obviously, it is possible to increase the number of induction heaters with respective main switches connected to the output 16c of the switching converter 16.

The control unit 15 operates the main switches 17 and 18 on the basis of user's settings provided through the user interface 8.

In particular, the control unit 15 closes the first main switch 17 when it is requested that the first induction heater 3 is fed and closes the second main switch 18 when it is requested that the induction heater 4 is fed.

When both the induction heaters 3 and 4 are requested to provide heat, on the basis of the total power request, the control unit 15 is configured for operating in one of the following two modes: in a first mode the control unit 15 cyclically and alternately energizes the induction heaters 3 and 4 by closing the first main switch 17 and opening the second main switch 18 in first time intervals and by closing the second main switch 18 and opening the first main switch 17 in second time intervals; in a second mode the control unit 15 energizes the induction heaters 3 and 4 by closing the first main switch 17 and the second main switch 18 in the same time.

In particular, the control unit 15 is configured to operate according to the first mode or to the second mode on the basis of the user's request.

The sensing network 20 is connected to the induction heaters 3 and 4 to sense electric parameters thereof, in particular voltages on nodes 70 and 80 respectively or a currents flowing through the induction heaters 3 and 4.

In a particular embodiment shown in figure 2 not limiting the scope of protection, the sensing network 20 is configured to sense a voltage on the node 70 where is connected the second terminal 3b of the first induction heater 3 and the second terminal of the capacitor 60b and a voltage on the node 80 where is connected the second terminal 4b of the second induction heater 4 and the second terminal of the capacitor 61b and to provide a first voltage sense signal Ssvi and a second voltage sense signal S_{SV2}, respectively.

In the non-limiting embodiment of figure 2, the sensing network 20 comprises a first voltage divider 21 and a second voltage divider 22. The first voltage divider 21 is connected to the node 70 and hence to the second terminal 3b of the first induction heater 3 and to the second terminal of the capacitor 60b and has an intermediate node coupled to a voltage sense input of the control unit 15 to provide the first voltage sense signal Ssvi. The second voltage divider 22 is connected to the node 80 and hence to the second terminal 4b of the second induction heater 4 and to the second terminal of the capacitor 61b and has an intermediate node coupled to a respective voltage sense input of the control unit 15 to provide the second voltage sense signal S_{SV2}.

The control unit 15 is connected to the sensing network 20 and receives the sensed electric parameters from the sensing network 20. In particular, the control unit 15 receives a sensed voltage at the terminals of the capacitor 60b by means of the first voltage sense signal S_{SV1} and the sensed voltage at the terminals of the capacitor 61b by means of the second voltage sense signal S_{SV2}.

In an embodiment of the present invention, the control unit 15 determines the currents flowing in the induction heaters 3 and 4 on the basis of sensed voltages, preferably by computing the first derivative of the sensed voltages respect to time, at the terminals of the capacitors 60b and 61b, respectively.

The control unit 15 controls the switching converter 16 on the basis of at least one of the sensed electric parameters of the sensing network 20, in particular the control unit 15 controls the switching of the converter switches 16a and 16b to convert the DC voltage of the DC bus 14 in the AC voltage to the output 16c on the basis of the at least one of the sensed electric parameters received by the sensing network 20, in particular on the basis of the sensed voltages on the terminals of the capacitor 60b and/or of the capacitor 61b or the current flowing into the first induction heater 3 and/or the second induction heater 4.

The control unit 15 is configured to carry out a pan detection function, in particular on the basis of the electric parameter sensed by the sensing network 20 when one of the induction heater 3 and/or 4 is fed and also when at least one of the induction heater 3 and/or 4 is not fed.

In particular, when one of the first induction heater 3 and/or the second induction heater 4 is/are fed by the switching converter 16 and hence the corresponding main switch 17 and/or 18 is closed, the control unit 15 senses the electric parameter, in particular a voltage on the terminals of the respective capacitor 60b and/or 61b or a current flowing in the respective induction heater 3 and/or 4, by means of the sensing network 20 and detects the presence of a pan over the plate 2 in the vicinity of the respective fed induction heater 3 and/or 4 based on said sensed electric parameter and the information about the opening/closing status of the respective main switch 17 and/or 18.

In fact, the sensed electric parameter is dependent on whether or not a pan is present on the induction heater 3, 4 being energized. Accordingly, the control unit 15 determines the presence of a coupled piece of cookware for the first induction heater 3, when the first main switch 17 is closed and for the second induction heater 3 when the second main switch 18 is closed.

Further, when at least one of the induction heater 3 and/or 4 is not fed and hence the respective main switch 17 and/or 18 is open, the control unit 15 is able to carry out a pan detection over the plate 2 in the vicinity of the not fed induction heater 3 and/or 4 by operating on the respective first auxiliary switch 30 and/or the second auxiliary switch 40.

In particular, the first auxiliary switch 30 and the second auxiliary switch 40 are operated by the control unit 15 to carry out a pan detection function, based on the states (open or closed) of the first main switch 17 and of the second main switch 18. Information on the states of the first main switch 17 and of the second main switch 18 is available to the control unit 15 as the control unit 15 itself determines such states.

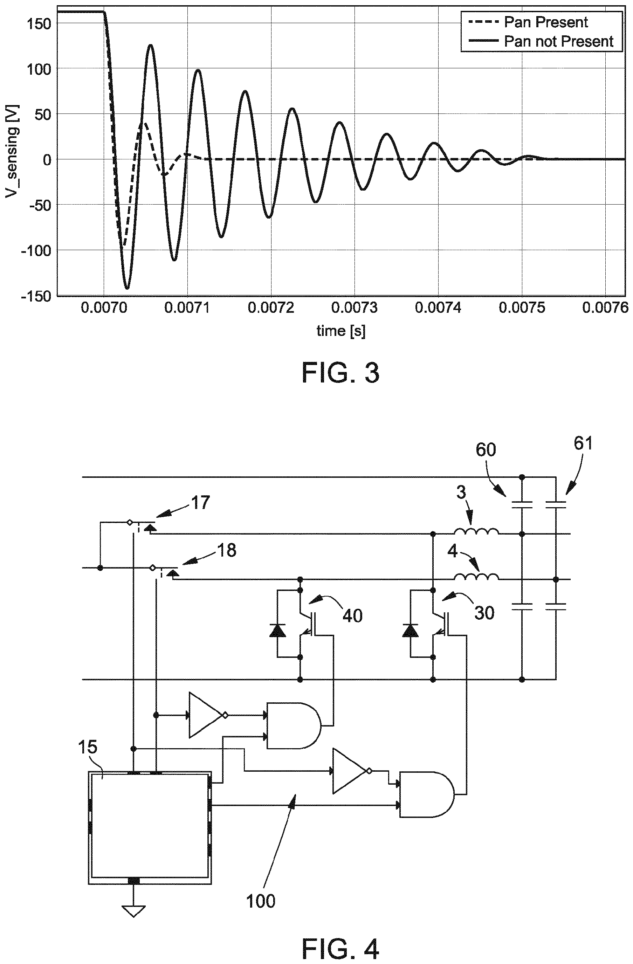

When the first main switch 17 is open and, hence, the first induction heater 3 is not fed, the control unit 15 can detect the presence of a pan over the plate 2 in the vicinity of the first induction heater 3 by operating on the first auxiliary switch 30. Specifically, the control unit 15 closes the first auxiliary switch 30 for a first detection interval while the first main switch 17 is open and senses the electric parameter of the first induction heater 3 provided by the first sensing network 20, namely the first voltage sense signal S_{SV1} in the embodiment of figure 2. When the first auxiliary switch 30 is closed, the energy stored in the resonant capacitor assembly 60 starts being discharged to the first induction heater 3 and triggers a damped oscillation the frequency and decay factor of which depend on the inductor complex impedance. The inductor complex impedance, the frequency and decay factor of the damped oscillation are all influenced by the presence of a piece of cookware in the vicinity of the induction heater. As it can be appreciated in figure 3, the oscillation is damped more quickly in the presence of a pan (dotted line) than in the absence of it (solid line). The damped oscillation resulting from the closure of the first auxiliary switch 30 can be easily monitored by the control unit 15 by the first sensing network 20.

Likewise, the control unit 15 closes the second auxiliary switch 40 for a second detection interval while the second main switch 18 is open and senses the electric parameter of the second induction heater 4 provided by the sensing network 20, namely the second voltage sense signal S_{SV2} from the second voltage divider 22 in the embodiment of figure 2. When the second auxiliary switch 40 is closed, the energy stored in the resonant capacitor assembly 61 starts being discharged to the second induction heater 4 and triggers a damped oscillation the frequency and decay factor of which ultimately depend on the presence or absence of a piece of cookware in the vicinity of the second induction heater 4. The damped oscillation resulting from the closure of the second auxiliary switch 40 can be monitored by the control unit 15 by the first sensing network 20 as well.

The first and the second detection interval are preferably from half to 10 natural periods of the L-C resonant circuit 65 and 66 respectively, in other words from half to 10 natural periods, wherein the natural period is a value proportional to the product, in particular to the square root of the product, of the induction value with the capacitor value of the respective resonant circuit 65 and 66, in particular is proportional to the square root of the product of the inductance value of the respective induction heater 3 or 4 with the capacitance value of the respective capacitor assembly 60 or 61.

In a preferred embodiment, the first and/or the second detection interval is enough to appreciate the natural frequency and the decay of the step response, and it is preferably comprised in a range of time from 10 to 500 microseconds.

In one embodiment, the control unit 15 is configured to implement an interlock function, to avoid that the first main switch 17 and the first auxiliary switch 30 are in the closed state the same time or the second main switch 18 and the second auxiliary switch 40 are in the closed state the same time.

Furthermore, the cooktop 1 comprises an interlock unit, that can be a software or hardware or part software and part hardware, connected to the first main switch 17 and the first auxiliary switch 30 to avoid the first main switch 17 and the first auxiliary switch 30 are closed or held closed at the same time.

In the not-limiting embodiment shown in figure 4, an interlock unit 100 may be provided in the form of a NOT-AND logic circuit or any equivalent logic operable to avoid that the first main switch 17 and the first auxiliary switch 30 are in the closed state the same time or the second main switch 18 and the second auxiliary switch 40 are in the closed state the same time.

Thanks to the present invention, the cooktop 1 comprises one switching converter 16 shared between two or more induction heater 3 and 4 and it is able to detect at any time the presence of a pan over the plate 2 in the vicinity of the induction heater 3 and/or the induction heater 4.

This invention apply to any cooktop having a switching converter shared between two or more induction heaters and having a resonant capacitor assembly coupled to said induction heaters and wherein the resonant capacitor assembly is left biased in idle condition.

In another preferred embodiment of the present invention not shown and not limiting the scope of protection, the electric parameter sensed by the control unit for detecting the presence of a pan is a current flowing in one of the induction heater. In this case, the cooktop may comprise, for each induction heater, a current sensor coupled with the respective induction heater to sense the current flowing through it. The control unit may detect the presence of a pan in the vicinity of the induction heater by analyzing the sensed currents.

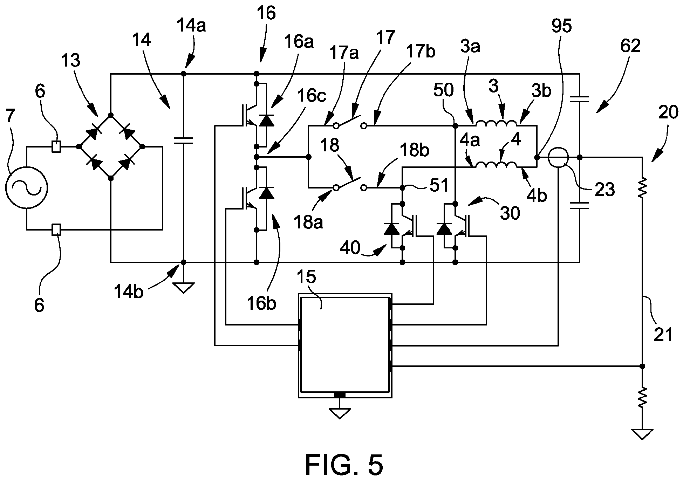

In figure 5, another preferred embodiment of the present invention not limiting the scope of protection is shown. In this embodiment the electric parameter sensed by the control unit 15 for detecting the presence of a pan 2 is a current flowing in one of the induction heater 3 or 4.

The first induction heater 3 and the second induction heater 4 have respective first terminals 3a, 4a selectively connectable to the output 16c of the switching converter 16, as already described, and respective second terminals 3b, 4b to a common node 95. The first terminals 3a, 4a of the first induction heater 3 and the second induction heater 4 are also selectively connectable to the lower rail 14b through the first auxiliary switch 30 and the second auxiliary switch 40, respectively. In order to reduce the cost, the cooktop 1 comprises a sensing element 23, in particular a current sensor, connected to the common node 95 of the first induction heater 3 and of the second induction heater 4. The sensing element 23 is configured to sense the current flowing in the induction heater 3 and/or in the induction heater 4 on the basis of the opening/closing position of the first main switch 17, the second main switch 18, the first auxiliary switch 30 and the second auxiliary switch 40. In particular, as the sensing element 23 is connected to both the first induction heater 3 and the second induction heater 4 at the common node 95, the sensing element 23 senses at any time the sum of the current flowing in both the first induction heater 3 and in the second induction heater 4.

In this embodiment, the cooktop 1 comprises only one resonant capacitor assembly 62 that replaces the two resonant capacitor assemblies 60 and 61 of the embodiment of figure 2.

The resonant capacitor assembly 62 is connected to both the first induction heater 3 and second induction heater 4, in particular is connected to the terminal 3b of the first induction heater 3 and to the terminal 4b of the induction heater 4, in particular is connected to the common node 95.

As for the resonant capacitor assemblies 60 and 61, the resonant capacitor assembly 62 comprises two capacitors having first terminals connected to the DC bus 14, in particular the first terminal of one of two capacitors is connected to the upper rail 14a of the DC bus 14 and the first terminal of the other of the two capacitors is connected to the low rail 14b of the DC bus 14; and second terminals connected together to the common node 95.

The resonant capacitor assembly 62 interacts with the first induction heater 3 and/or the second induction heater 4 on the basis of the opening/closing position of the first main switch 17, second main switch 18, first auxiliary switch 30 and second auxiliary switch 40.

The control unit 15 controls the first main switch 17, the second main switch 18, the first auxiliary switch 30, the second auxiliary switch 40 and the switching converter 16 to control the current that flows in the first induction heater 3 and/or the second induction heater 4.

In order to perform an accurate measurement on the current flowing only in one of the two induction heaters 3 and 4, the control unit 15 preferably turns off temporarily the other of the two induction heaters 3 and 4 preferably by halting for a third detection interval the commutation of the half bridge and closing the respective auxiliary switch 30 or 40 of one of the two induction heaters 3 or 4.

The third detection interval is preferably from half to 10 natural periods of the L-C resonant circuit formed by the resonant capacitor assembly 62 and one of the two induction heaters 3 or 4, in other words from half to 10 natural periods, wherein the natural period is a value proportional to the product, in particular to the square root of the product, of the induction value with the capacitor value.

In a preferred embodiment, the third detection interval is enough to appreciate the natural frequency and the decay of the step response, and it is preferably comprised in a range of time from 10 to 500 microseconds.

The control unit 15 analyzes the current or the voltage to detect the presence of the pan over the plate 2 in the vicinity of a not fed induction heater, in particular, when the first or the second auxiliary switch 30, 40 is closed a LC circuit is formed and hence a resonant circuit is formed. The control unit 15 analyzes a frequency and a decay factor of the waveform of the voltage or the current of said circuit that comprises on of the two induction heaters 3 or 4 and the respective capacitor. In particular, the frequency and the decay factor can be determined using techniques as Fast Fourier Transform, Phase Locked Loops, Zero Crossing detection, envelope detection, Least Squares curve fitting and the like.

## Claims

1. An induction cooktop comprising:
a DC bus (14);
at least a resonant capacitor assembly (60, 61; 62) connected to the DC bus (14);
a first resonant circuit (65) comprising a first induction heater (3) and the at least a resonant capacitor assembly (60; 62) connected one another in a node (70; 95);
at least a second resonant circuit (66) comprising a second induction heater (4) and the at least a resonant capacitor assembly (61; 62) connected one another in a node (80; 95);
a switching converter (16);
a control unit (15);
a first main switch (17) and a second main switch (18) configured to be operated by the control unit (15) to selectively connect the first induction heater (3) and the second induction heater (4), to the switching converter (16) for selectively energizing the first induction heater (3) and/or the second induction heater (4);
a first auxiliary switch (30) connected from a side to the first induction heater (3) and from another side to the at least a resonant capacitor assembly (60; 62) and configured to be able to close the first resonant circuit (65) ;
a second auxiliary switch (40) connected from a side to the second induction heater (4) and from another side to the at least a resonant capacitor assembly (61; 62) and configured to be able to close the second resonant circuit (66);
wherein the control unit (15) is configured:
to sense an electric parameter regarding the first induction heater (3) in the first resonant circuit (65), preferably a current through the first induction heater (3) or a voltage in a point of the first resonant circuit (65), when the first induction heater (3) is not fed from the switching converter (16) and the first auxiliary switch (30) closes the first resonant circuit (65) in such a way that the at least resonant capacitor assembly (60; 62) is connected to the first induction heater (3) by means of the first auxiliary switch (30) and a damped oscillation occurs between them;
to sense an electric parameter regarding the second induction heater (4) in the second resonant circuit (66), preferably a current through the second induction heater (4) or a voltage in a point of the second resonant circuit (66), when the second induction heater (4) is not fed from the switching converter (16) and the second auxiliary switch (40) closes the second resonant circuit (66) in such a way that the at least resonant capacitor assembly (61; 62) is connected to the second induction heater (4) by means of the second auxiliary switch (40) and a damped oscillation occurs between them;
detect the presence of a pan on the cooktop (1) on the basis of the sensed electric parameter, in particular in vicinity of the first or the second induction heater (3, 4), preferably when said first and/or second induction heater (3, 4) is not fed by the switching converter (16) by closing the respective first auxiliary switch (30) and/or the second auxiliary switch (40) and analyzing the electric parameter of said damped oscillation.

2. The induction cooktop according to claim 1, wherein the first auxiliary switch (30) is distinct from the first main switch (17); preferably the first auxiliary switch (30) is a semiconductor switch, preferably a transistor, in particular a power semiconductor switch, preferably a power transistor; the second auxiliary switch (40) is distinct from the second main switch (18); preferably the second auxiliary switch (40) is a semiconductor switch, preferably a transistor, in particular a semiconductor switch, in particular a power transistor.

3. The induction cooktop according to claim 1 or 2, wherein the switching converter (16) comprising at least a first converter switch (16a) and a second converter switch (16b); and wherein the first auxiliary switch (30) is distinct from the first and the second converter switch (16a, 16b); the second auxiliary switch (40) is distinct from the first and second converter switch (16a, 16b).

4. The induction cooktop according to anyone of the previous claim, wherein the first auxiliary switch (30) comprise a first terminal (30a) and a second terminal (30b); the first main switch (17) comprising a first terminal (17a) and a second terminal (17b); the first terminal (30a) and the second terminal (30b) of the first auxiliary switch (30) are distinct from the first terminal (17a) and the second terminal (17b) of the first main switch (17); in particular the first terminal (30a) of the first auxiliary switch (30) and the second terminal (17b) of the first main switch (17) are connected in a first node (50); wherein the second auxiliary switch (40) comprises a first terminal (40a) and a second terminal (40b); the second main switch (18) comprising a first terminal (18a) and a second terminal (18b); the first terminal (40a) and the second terminal (40b) of the second auxiliary switch (40) are distinct from the first terminal (18a) and the second terminal (18b) of the second main switch (18); in particular the first terminal (40a) of the second auxiliary switch (40) and the second terminal (18b) of the second main switch (18) are connected in a second node (51).

5. The induction cooktop according to any one of the previous claims, wherein the first auxiliary switch (30) is connected at a first node (50) located between the first induction heater (3) and the first main switch (17), in particular a first terminal (30a) of the first auxiliary switch (30) is connected to the first terminal (3a) of the induction heater (3) in the first node (50); wherein the second auxiliary switch (40) is connected in a second node (51) located between the second induction heater (4) and the second main switch (18), in particular a first terminal (40a) of the second auxiliary switch (40) is connected to the first terminal (4a) of the second induction heater (4) in the second node (51)

6. The induction cooktop according to any one of the previous claims, comprising a plurality of resonant capacitor assembly (60, 61) comprising the at least resonant capacitor assembly, in particular a first resonant capacitor assembly (60) and a second resonant capacitor assembly (61); wherein the first resonant circuit (65) comprising the first resonant capacitor assembly (60); and the second resonant circuit (66) comprising the second resonant capacitor assembly (61); wherein the first induction heater (3) is connected to first resonant capacitor assembly (60); in particular a second terminal (3b) of the first induction heater (3) is connected to the first resonant capacitor assembly (60); the second induction heater (4) being connected to the second resonant capacitor assembly (61), in particular a second terminal (4b) of the second induction heater (4) is connected to the second resonant capacitor assembly (61); wherein the first auxiliary switch (30) is connected from a side to the first induction heater (3) and from another side to the first resonant capacitor assembly (60) and is able to close the first resonant circuit (65); wherein the second auxiliary switch (40) is connected from a side to the second induction heater (4) and from another side to the second resonant capacitor assembly (61) and is able to close the second resonant circuit (66).

7. The induction cooktop according to anyone of the previous claims, wherein the DC bus (14) is placed upstream to the switching converter (16) to feed a rectified voltage or direct voltage to the switching converter (16) to be converted in alternating voltage; wherein the first resonant capacitor assembly (60) comprises two capacitors (60a, 60b), each of them having a terminal connected in the node (70) connected the second terminal (3b) of the first induction heater (3), and wherein the other terminals of the two capacitor (60a, 60b) are connected to an upper rail (14a) of a DC bus (14) and to the lower rail of the DC bus (14b), respectively, preferably the two capacitor (60a, 60b) have the same capacitance value and at each of the two capacitor (60a, 60b) is applied a voltage approximately equal to half the voltage of the DC bus (14).

8. The induction cooktop according to anyone of the previous claims, wherein the switching converter (16) comprising an inverter circuit, preferably a half bridge inverter circuit, placed downstream to the DC bus (14), to convert the DC voltage to an AC voltage, preferably a high frequency AC voltage to feed at least one of the first and second induction heater (3, 4), preferably the inverter comprising converter switches (16a, 16b) configured to switch from low frequency to high frequency.

9. The induction cooktop according to anyone of the previous claims, wherein the first auxiliary switch (30) is operated by the control unit (15) and it is closed only when the first main switch (17) is open; wherein the second auxiliary switch (40) by the control unit (15) and it is closed only when the second main switch (18) is open.

10. The induction cooktop according to claim 9, comprising an interlock unit (100) connected to the first main switch (17) and to first auxiliary switch (30) and operating to avoid that the first main switch (17) and the first auxiliary switch (30) are closed at the same time; wherein the interlock unit is connected to the second main switch (18) and to second auxiliary switch (40) and operating to avoid that the second main switch (18) and the second auxiliary switch (40) are closed at the same time.

11. The induction cooktop according to anyone of the previous claims, comprising a sensing network (20) to sense an electric parameter, in particular a voltage or a current, regarding the first induction heater (3) or the second induction heater (4) in the first or second resonant circuit (65, 66) respectively, in a particular the sensing network (20) is connected to the node (70, 80; 95) between the first induction heater (3) or the second induction heater (4) and the at least a resonant capacitor assembly (60, 61; 62), respectively; the sensing network (20) is connected to the control unit (15) to provide the sensed electric parameter to the control unit (15).

12. The induction cooktop according to the claim 11, wherein the control unit (15) is configured to receive the electric parameter and to control the switching converter (16) on the basis of the sensed electric parameter; the control unit is configured to detect the presence of a pan in the vicinity of the first induction heater (3) or the second induction heater (4) on the basis of the said sensed electric parameter when the first induction heater (3) and/or the second induction heater (4) is/are fed and the respective first or second main switch (17, 18) is close, and when the first induction heater and/or the second induction heater is/are not fed.

13. The induction cooktop according to anyone of the previous claims, wherein the first induction heater (3) and the second induction heater (4) have respective first terminals (3a, 4a) selectively connectable to an output (16c) of the switching converter (16), and respective second terminals (3b, 4b) connected to a common node (95); the cooktop (1) comprising a sensing element (23), in particular a current sensor, connected to the common node (95) of the first induction heater (3) and of the second induction heater (4); the sensing element (23) being configured to sense the current flowing in the first induction heater (3) and/or in the second induction heater (4) on the basis of the opening/closing position of first main switch (17), second main switch (18), first auxiliary switch (30) and second auxiliary switch (40); in particular, the control unit (15) is configured to hold open temporarily the first main switch (17) and the second main switch (18) or turning off the switching converter (16) when the first auxiliary switch (30) or the second auxiliary switch (40) are closed to sense the current flowing in the first induction heater (3) and/or in the second induction heater (4), respectively.

14. A method to detect a pan over an induction cooktop for an induction cooktop; wherein the induction cooktop (1) comprising: a DC bus (14); at least a resonant capacitor assembly (60, 61; 62) connected to the DC bus (14); a first resonant circuit (65) comprising a first induction heater (3) and the at least a resonant capacitor assembly (60; 62) connected each another in a node (70; 95); a second resonant circuit (66) comprising a second induction heater (4) and the at least a resonant capacitor assembly (61; 62) connected each another in a node (80; 95); a switching converter (16) shared between the first induction heater (3) and the second induction heater (4) by means of a first main switch (17) and a second main switch (18) configured to be operated by the control unit (15) to selectively connect the first induction heater (3) and/or the second induction heater (4) to the switching converter (16) for selectively energizing the first induction heater (3) and/or the second induction heater (4);
The method comprising the step of:
to sense an electric parameter regarding the first induction heater (3) in the first resonant circuit (65), preferably a current through the first induction heater (3) or a voltage in a point of the first resonant circuit (65), when the first induction heater (3) is not fed by the switching converter (16), and a first auxiliary switch (30), distinct from the first main switch (17), closes the first resonant circuit (65) in such a way that the at least resonant capacitor assembly (60; 62) is connected to the first induction heater (3) by means of the first auxiliary switch (30) and a damped oscillation occurs between them;
to sense an electric parameter regarding the second induction heater (4) in the second resonant circuit (66), preferably a current through the second induction heater (4) or a voltage in a point of the second resonant circuit (66), when the second induction heater (4) is not fed by the switching converter (16), and a second auxiliary switch (40), distinct from the second main switch (18), closes the second resonant circuit (66) in such a way that the at least resonant capacitor assembly (61; 62) is connected to the second induction heater (4) by means of the second auxiliary switch (40) and a damped oscillation occurs between them;
detect the presence of a pan on the cooktop (1) on the basis of the sensed electric parameter, in particular in vicinity of the first or the second induction heater (3, 4), preferably said first and/or second induction heater (3, 4) is not fed by the switching converter (16) by closing the respective first auxiliary switch (30) and/or the second auxiliary switch (40) and analyzing the electric parameter of said damped oscillation.

15. The method of claim 14, wherein the first auxiliary switch (30) is a semiconductor switch, preferably a transistor, in particular a power semiconductor switch, preferably a power transistor; the second auxiliary switch (40) is distinct from the second main switch (18); the second auxiliary switch (40) is a semiconductor switch, preferably a transistor, in particular a semiconductor switch, in particular a power transistor.

## Patentansprüche

1. Induktionskochfeld, umfassend:
einen DC-Bus (14);
mindestens eine Resonanzkondensatoranordnung (60, 61; 62), die mit dem DC-Bus (14) verbunden ist;
einen ersten Resonanzkreis (65), der ein erstes Induktionsheizgerät (3) und die mindestens eine Resonanzkondensatoranordnung (60; 62) umfasst, die in einem Knoten (70; 95) miteinander verbunden sind;
mindestens einen zweiten Resonanzkreis (66), der ein zweites Induktionsheizgerät (4) und die mindestens eine Resonanzkondensatoranordnung (61; 62) umfasst, die in einem Knoten (80; 95) miteinander verbunden sind;
einen Schaltwandler (16);
eine Steuereinheit (15);
einen ersten Hauptschalter (17) und einen zweiten Hauptschalter (18), die so konfiguriert sind, dass sie von der Steuereinheit (15) betätigt werden, um das erste Induktionsheizgerät (3) und das zweite Induktionsheizgerät (4) selektiv mit dem Schaltwandler (16) zu verbinden, um das erste Induktionsheizgerät (3) und/oder das zweite Induktionsheizgerät (4) selektiv mit Energie zu versorgen;
einen ersten Hilfsschalter (30), der von einer Seite mit dem ersten Induktionsheizgerät (3) und von einer anderen Seite mit der mindestens einen Resonanzkondensatoranordnung (60; 62) verbunden ist und so konfiguriert ist, dass er den ersten Resonanzkreis (65) schließen kann;
einen zweiten Hilfsschalter (40), der von einer Seite mit dem zweiten Induktionsheizgerät (4) und von einer anderen Seite mit der mindestens einen Resonanzkondensatoranordnung (61; 62) verbunden ist und so konfiguriert ist, dass er den zweiten Resonanzkreis (66) schließen kann;
wobei die Steuereinheit (15) dazu konfiguriert ist:
einen elektrischen Parameter bezüglich des ersten Induktionsheizgeräts (3) in dem ersten Resonanzkreis (65) zu erfassen, vorzugsweise einen Strom durch das erste Induktionsheizgerät (3) oder eine Spannung in einem Punkt des ersten Resonanzkreises (65), wenn das erste Induktionsheizgerät (3) nicht von dem Schaltwandler (16) gespeist wird und der erste Hilfsschalter (30) den ersten Resonanzkreis (65) so schließt, dass die mindestens eine Resonanzkondensatoranordnung (60; 62) über den ersten Hilfsschalter (30) mit dem ersten Induktionsheizgerät (3) verbunden ist und eine gedämpfte Schwingung zwischen ihnen auftritt;
einen elektrischen Parameter bezüglich des zweiten Induktionsheizgeräts (4) in dem zweiten Resonanzkreis (66) zu erfassen, vorzugsweise einen Strom durch das zweite Induktionsheizgerät (4) oder eine Spannung in einem Punkt des zweiten Resonanzkreises (66), wenn das zweite Induktionsheizgerät (4) nicht von dem Schaltwandler (16) gespeist wird und der zweite Hilfsschalter (40) den zweiten Resonanzkreis (66) so schließt, dass die mindestens eine Resonanzkondensatoranordnung (61; 62) über den zweiten Hilfsschalter (40) mit dem zweiten Induktionsheizgerät (4) verbunden ist und eine gedämpfte Schwingung zwischen ihnen auftritt;
das Vorhandensein einer Pfanne auf dem Kochfeld (1) auf der Grundlage des erfassten elektrischen Parameters zu erkennen, insbesondere in der Nähe des ersten oder des zweiten Induktionsheizgeräts (3, 4), vorzugsweise wenn das erste und/oder das zweite Induktionsheizgerät (3, 4) nicht durch den Schaltwandler (16) gespeist wird, indem der jeweilige erste Hilfsschalter (30) und/oder der zweite Hilfsschalter (40) geschlossen und der elektrische Parameter der gedämpften Schwingung analysiert wird.

2. Induktionskochfeld nach Anspruch 1, wobei der erste Hilfsschalter (30) von dem ersten Hauptschalter (17) unterschiedlich ist; vorzugsweise ist der erste Hilfsschalter (30) ein Halbleiterschalter, vorzugsweise ein Transistor, insbesondere ein Leistungshalbleiterschalter, vorzugsweise ein Leistungstransistor; der zweite Hilfsschalter (40) ist von dem zweiten Hauptschalter (18) unterschiedlich; vorzugsweise ist der zweite Hilfsschalter (40) ein Halbleiterschalter, vorzugsweise ein Transistor, insbesondere ein Leistungshalbleiterschalter, vorzugsweise ein Leistungstransistor.

3. Induktionskochfeld nach Anspruch 1 oder 2, wobei der Schaltwandler (16) mindestens einen ersten Wandlerschalter (16a) und einen zweiten Wandlerschalter (16b) umfasst; und wobei der erste Hilfsschalter (30) von dem ersten und dem zweiten Wandlerschalter (16a, 16b) unterschiedlich ist; der zweite Hilfsschalter (40) ist von dem ersten und dem zweiten Wandlerschalter (16a, 16b) verschieden.

4. Induktionskochfeld nach einem der vorhergehenden Ansprüche, wobei der erste Hilfsschalter (30) einen ersten Anschluss (30a) und einen zweiten Anschluss (30b) umfasst; wobei der erste Hauptschalter (17) einen ersten Anschluss (17a) und einen zweiten Anschluss (17b) umfasst; der erste Anschluss (30a) und der zweite Anschluss (30b) des ersten Hilfsschalters (30) sind von dem ersten Anschluss (17a) und dem zweiten Anschluss (17b) des ersten Hauptschalters (17) unterschiedlich; insbesondere sind der erste Anschluss (30a) des ersten Hilfsschalters (30) und der zweite Anschluss (17b) des ersten Hauptschalters (17) in einem ersten Knoten (50) verbunden; wobei der zweite Hilfsschalter (40) einen ersten Anschluss (40a) und einen zweiten Anschluss (40b) umfasst; wobei der zweite Hauptschalter (18) einen ersten Anschluss (18a) und einen zweiten Anschluss (18b) umfasst; der erste Anschluss (40a) und der zweite Anschluss (40b) des zweiten Hilfsschalters (40) sind von dem ersten Anschluss (18a) und dem zweiten Anschluss (18b) des zweiten Hauptschalters (18) unterschiedlich; insbesondere sind der erste Anschluss (40a) des zweiten Hilfsschalters (40) und der zweite Anschluss (18b) des zweiten Hauptschalters (18) in einem zweiten Knoten (51) verbunden.

5. Induktionskochfeld nach einem der vorhergehenden Ansprüche, wobei der erste Hilfsschalter (30) an einem ersten Knoten (50) verbunden ist, der sich zwischen dem ersten Induktionsheizgerät (3) und dem ersten Hauptschalter (17) befindet, insbesondere ist ein erster Anschluss (30a) des ersten Hilfsschalters (30) mit dem ersten Anschluss (3a) des Induktionsheizgeräts (3) in dem ersten Knoten (50) verbunden; wobei der zweite Hilfsschalter (40) in einem zweiten Knoten (51) verbunden ist, der sich zwischen dem zweiten Induktionsheizgerät (4) und dem zweiten Hauptschalter (18) befindet, insbesondere ist ein erster Anschluss (40a) des zweiten Hilfsschalters (40) mit dem ersten Anschluss (4a) des zweiten Induktionsheizgeräts (4) in dem zweiten Knoten (51) verbunden.

6. Induktionskochfeld nach einem der vorhergehenden Ansprüche, umfassend eine Vielzahl von Resonanzkondensatoranordnungen (60, 61), die die zumindest eine Resonanzkondensatoranordnung umfassen, insbesondere eine erste Resonanzkondensatoranordnung (60) und eine zweite Resonanzkondensatoranordnung (61); wobei der erste Resonanzkreis (65) die erste Resonanzkondensatoranordnung (60) umfasst; und wobei der zweite Resonanzkreis (66) die zweite Resonanzkondensatoranordnung (61) umfasst; wobei das erste Induktionsheizgerät (3) mit der ersten Resonanzkondensatoranordnung (60) verbunden ist; insbesondere ist ein zweiter Anschluss (3b) des ersten Induktionsheizgeräts (3) mit der ersten Resonanzkondensatoranordnung (60) verbunden; wobei das zweite Induktionsheizgerät (4) mit der zweiten Resonanzkondensatoranordnung (61) verbunden ist, insbesondere ist ein zweiter Anschluss (4b) des zweiten Induktionsheizgeräts (4) mit der zweiten Resonanzkondensatoranordnung (61) verbunden; wobei der erste Hilfsschalter (30) von einer Seite mit dem ersten Induktionsheizgerät (3) und von einer anderen Seite mit der ersten Resonanzkondensatoranordnung (60) verbunden ist und in der Lage ist, den ersten Resonanzkreis (65) zu schließen; wobei der zweite Hilfsschalter (40) von einer Seite mit dem zweiten Induktionsheizgerät (4) und von einer anderen Seite mit der zweiten Resonanzkondensatoranordnung (61) verbunden ist und in der Lage ist, den zweiten Resonanzkreis (66) zu schließen.

7. Induktionskochfeld nach einem der vorhergehenden Ansprüche, wobei der DC-Bus (14) dem Schaltwandler (16) vorgeschaltet ist, um dem Schaltwandler (16) eine gleichgerichtete Spannung oder Gleichspannung zuzuführen, die in eine Wechselspannung umgewandelt werden soll; wobei die erste Resonanzkondensatoranordnung (60) zwei Kondensatoren (60a, 60b) umfasst, von denen jeder einen Anschluss aufweist, der in dem Knoten (70) verbunden ist, der mit dem zweiten Anschluss (3b) des ersten Induktionsheizgeräts (3) verbunden ist, und wobei die anderen Anschlüsse der zwei Kondensatoren (60a, 60b) mit einer oberen Schiene (14a) eines DC-Busses (14) bzw. mit der unteren Schiene des DC-Busses (14b) verbunden sind, vorzugsweise weisen die zwei Kondensatoren (60a, 60b) den gleichen Kapazitätswert auf und an jeden der zwei Kondensatoren (60a, 60b) wird eine Spannung angelegt, die ungefähr gleich der Hälfte der Spannung des DC-Busses (14) ist.

8. Induktionskochfeld nach einem der vorhergehenden Ansprüche, wobei der Schaltwandler (16) eine Wechselrichterschaltung, vorzugsweise eine Halbbrücken-Wechselrichterschaltung, umfasst, die stromabwärts des DC-Busses (14) angeordnet ist, um die Gleichspannung in eine Wechselspannung, vorzugsweise eine hochfrequente Wechselspannung umzuwandeln, um mindestens eins des ersten und zweiten Induktionsheizgerätes (3, 4) zu speisen, wobei der Wechselrichter vorzugsweise Wandlerschalter (16a, 16b) umfasst, die so konfiguriert sind, dass sie von Niederfrequenz auf Hochfrequenz umschalten.

9. Induktionskochfeld nach einem der vorhergehenden Ansprüche, wobei der erste Hilfsschalter (30) von der Steuereinheit (15) betätigt wird und er geschlossen ist, erst wenn der erste Hauptschalter (17) offen ist; wobei der zweite Hilfsschalter (40) von der Steuereinheit (15) betätigt wird und er geschlossen ist, erst wenn der zweite Hauptschalter (18) offen ist.

10. Induktionskochfeld nach Anspruch 9, umfassend eine Verriegelungseinheit (100), die mit dem ersten Hauptschalter (17) und dem ersten Hilfsschalter (30) verbunden ist und so arbeitet, dass sie verhindert, dass der erste Hauptschalter (17) und der erste Hilfsschalter (30) gleichzeitig geschlossen werden; wobei die Verriegelungseinheit mit dem zweiten Hauptschalter (18) und dem zweiten Hilfsschalter (40) verbunden ist und so arbeitet, dass sie verhindert, dass der zweite Hauptschalter (18) und der zweite Hilfsschalter (40) gleichzeitig geschlossen werden.

11. Induktionskochfeld nach einem der vorhergehenden Ansprüche, mit einem Erfassungsnetzwerk (20) zum Erfassen eines elektrischen Parameters, insbesondere einer Spannung oder eines Stroms, bezüglich des ersten Induktionsheizgeräts (3) oder des zweiten Induktionsheizgeräts (4) in dem ersten bzw. zweiten Resonanzkreis (65, 66), wobei das Erfassungsnetzwerk (20) insbesondere mit dem Knoten (70, 80; 95) zwischen dem ersten Induktionsheizgerät (3) bzw. dem zweiten Induktionsheizgerät (4) und der mindestens einen Resonanzkondensatoranordnung (60, 61; 62) verbunden ist; das Erfassungsnetzwerk (20) ist mit der Steuereinheit (15) verbunden, um den erfassten elektrischen Parameter an die Steuereinheit (15) zu liefern.

12. Induktionskochfeld nach Anspruch 11, wobei die Steuereinheit (15) so konfiguriert ist, dass sie den elektrischen Parameter empfängt und den Schaltwandler (16) auf der Grundlage des erfassten elektrischen Parameters steuert; die Steuereinheit ist so konfiguriert, dass sie das Vorhandensein einer Pfanne in der Nähe des ersten Induktionsheizgeräts (3) oder des zweiten Induktionsheizgeräts (4) auf der Grundlage des erfassten elektrischen Parameters erkennt, wenn das erste Induktionsheizgerät (3) und/oder das zweite Induktionsheizgerät (4) gespeist wird/werden und der jeweilige erste oder zweite Hauptschalter (17, 18) geschlossen ist, und wenn das erste Induktionsheizgerät und/oder das zweite Induktionsheizgerät nicht gespeist wird/werden.

13. Induktionskochfeld nach einem der vorhergehenden Ansprüche, wobei das erste Induktionsheizgerät (3) und das zweite Induktionsheizgerät (4) jeweilige erste Anschlüsse (3a, 4a), die selektiv mit einem Ausgang (16c) des Schaltwandlers (16) verbunden werden können, und jeweilige zweite Anschlüsse (3b, 4b) aufweisen, die mit einem gemeinsamen Knoten (95) verbunden sind; wobei das Kochfeld (1) ein Erfassungselement (23), insbesondere einen Stromsensor, umfasst, das mit dem gemeinsamen Knoten (95) des ersten Induktionsheizgeräts (3) und des zweiten Induktionsheizgeräts (4) verbunden ist; wobei das Erfassungselement (23) so konfiguriert ist, dass es den im ersten Induktionsheizgerät (3) und/oder im zweiten Induktionsheizgerät (4) fließenden Strom auf der Grundlage der Öffnungs-/Schließposition des ersten Hauptschalters (17), des zweiten Hauptschalters (18), des ersten Hilfsschalters (30) und des zweiten Hilfsschalters (40) erfasst; insbesondere ist die Steuereinheit (15) so konfiguriert, dass sie den ersten Hauptschalter (17) und den zweiten Hauptschalter (18) vorübergehend offen hält oder den Schaltwandler (16) ausschaltet, wenn der erste Hilfsschalter (30) oder der zweite Hilfsschalter (40) geschlossen sind, um den im ersten Induktionsheizgerät (3) und/oder im zweiten Induktionsheizgerät (4) fließenden Strom zu erfassen.

14. Verfahren zum Erfassen einer Pfanne über einem Induktionskochfeld für ein Induktionskochfeld, wobei das Induktionskochfeld (1) umfasst: einen DC-Bus (14); mindestens eine Resonanzkondensatoranordnung (60, 61; 62), die mit dem DC-Bus (14) verbunden ist; einen ersten Resonanzkreis (65), der ein erstes Induktionsheizgerät (3) und die mindestens eine Resonanzkondensatoranordnung (60; 62) umfasst, die in einem Knoten (70; 95) miteinander verbunden sind; einen zweiten Resonanzkreis (66), der ein zweites Induktionsheizgerät (4) und die mindestens eine Resonanzkondensatoranordnung (61; 62) umfasst, die in einem Knoten (80; 95) miteinander verbunden sind; einen Schaltwandler (16), der zwischen dem ersten Induktionsheizgerät (3) und dem zweiten Induktionsheizgerät (4) mittels eines ersten Hauptschalters (17) und eines zweiten Hauptschalters (18) geteilt wird, die so konfiguriert sind, dass sie von der Steuereinheit (15) betätigt werden, um das erste Induktionsheizgerät (3) und/oder das zweite Induktionsheizgerät (4) selektiv mit dem Schaltwandler (16) zu verbinden, um das erste Induktionsheizgerät (3) und/oder das zweite Induktionsheizgerät (4) selektiv mit Energie zu versorgen;
Wobei das Verfahren die folgenden Schritte umfasst:
Erfassen eines elektrischen Parameters bezüglich des ersten Induktionsheizgeräts (3) in dem ersten Resonanzkreis (65), vorzugsweise eines Stroms durch das erste Induktionsheizgerät (3) oder einer Spannung in einem Punkt des ersten Resonanzkreises (65), wenn das erste Induktionsheizgerät (3) nicht durch den Schaltwandler (16) gespeist wird, und ein erster Hilfsschalter (30), der von dem ersten Hauptschalter (17) unterschiedlich ist, den ersten Resonanzkreis (65) so schließt, dass die mindestens eine Resonanzkondensatoranordnung (60; 62) über den ersten Hilfsschalter (30) mit dem ersten Induktionsheizgerät (3) verbunden ist und eine gedämpfte Schwingung zwischen ihnen auftritt;
Erfassen eines elektrischen Parameters bezüglich des zweiten Induktionsheizgeräts (4) in dem zweiten Resonanzkreis (66), vorzugsweise eines Stroms durch das zweite Induktionsheizgerät (4) oder einer Spannung in einem Punkt des zweiten Resonanzkreises (66), wenn das zweite Induktionsheizgerät (4) nicht von dem Schaltwandler (16) gespeist wird, und ein zweiter Hilfsschalter (40), der von dem zweiten Hauptschalter (18) unterschiedlich ist, den zweiten Resonanzkreis (66) so schließt, dass die zumindest eine Resonanzkondensatoranordnung (61; 62) mittels des zweiten Hilfsschalters (40) mit dem zweiten Induktionsheizgerät (4) verbunden ist und eine gedämpfte Schwingung zwischen ihnen auftritt;
Erkennen des Vorhandenseins einer Pfanne auf dem Kochfeld (1) auf der Grundlage des erfassten elektrischen Parameters, insbesondere in der Nähe des ersten oder des zweiten Induktionsheizgeräts (3, 4), vorzugsweise wird das erste und/oder das zweite Induktionsheizgerät (3, 4) nicht durch den Schaltwandler (16) gespeist, indem der jeweilige erste Hilfsschalter (30) und/oder der zweite Hilfsschalter (40) geschlossen und der elektrische Parameter der gedämpften Schwingung analysiert wird.

15. Verfahren nach Anspruch 14, wobei der erste Hilfsschalter (30) ein Halbleiterschalter, vorzugsweise ein Transistor, insbesondere ein Leistungshalbleiterschalter, vorzugsweise ein Leistungstransistor, ist; der zweite Hilfsschalter (40) ist von dem zweiten Hauptschalter (18) unterschiedlich; der zweite Hilfsschalter (40) ist ein Halbleiterschalter, vorzugsweise ein Transistor, insbesondere ein Halbleiterschalter, vor allem ein Leistungstransistor.

## Revendications

1. Plaque de cuisson à induction comprenant :
un bus CC (14) ;
au moins un ensemble de condensateurs résonnants (60, 61 ; 62) connecté au bus CC (14) ;
un premier circuit résonant (65) comprenant un premier dispositif de chauffage à induction (3) et au moins un ensemble de condensateurs résonants (60 ; 62) connectés l'un à l'autre dans un noeud (70 ; 95) ;
au moins un deuxième circuit résonant (66) comprenant un deuxième dispositif de chauffage à induction (4) et au moins un ensemble de condensateurs résonants (61 ; 62) connectés l'un à l'autre dans un noeud (80 ; 95) ;
un convertisseur de commutation (16) ;
une unité de commande (15) ;
un premier commutateur principal (17) et un deuxième commutateur principal (18) configurés pour être actionnés par l'unité de commande (15) afin de connecter sélectivement le premier dispositif de chauffage à induction (3) et le deuxième dispositif de chauffage à induction (4) au convertisseur de commutation (16) pour fournir de l'énergie sélectivement le premier dispositif de chauffage à induction (3) et/ou le deuxième dispositif de chauffage à induction (4) ;
un premier commutateur auxiliaire (30) connecté d'un côté au premier dispositif de chauffage à induction (3) et d'un autre côté à l'ensemble de condensateurs résonants (60 ; 62) au moins et configuré pour pouvoir fermer le premier circuit résonant (65) ;
un deuxième commutateur auxiliaire (40) connecté d'un côté au deuxième dispositif de chauffage à induction (4) et d'un autre côté à au moins un ensemble de condensateurs résonants (61 ; 62) et configuré pour pouvoir fermer le deuxième circuit résonant (66) ;
dans laquelle l'unité de commande (15) est configurée :
pour détecter un paramètre électrique concernant le premier dispositif de chauffage à induction (3) dans le premier circuit résonant (65), de préférence un courant traversant le premier dispositif de chauffage à induction (3) ou une tension en un point du premier circuit résonant (65), lorsque le premier dispositif de chauffage à induction (3) n'est pas alimenté par le convertisseur de commutation (16) et que le premier commutateur auxiliaire (30) ferme le premier circuit résonant (65) de telle sorte que l'ensemble de condensateurs au moins résonants (60, 62) est connecté au premier dispositif de chauffage à induction (3) au moyen du premier commutateur auxiliaire (30) et qu'une oscillation amortie se produit entre eux ;
pour détecter un paramètre électrique concernant le deuxième dispositif de chauffage à induction (4) dans le deuxième circuit résonant (66), de préférence un courant traversant le deuxième dispositif de chauffage à induction (4) ou une tension en un point du deuxième circuit résonant (66), lorsque le deuxième dispositif de chauffage à induction (4) n'est pas alimenté par le convertisseur de commutation (16) et que le deuxième commutateur auxiliaire (40) ferme le deuxième circuit résonant (66) de manière à ce que l'ensemble de condensateurs au moins résonants (61 ; 62) est connecté au deuxième dispositif de chauffage à induction (4) au moyen du deuxième commutateur auxiliaire (40) et qu'une oscillation amortie se produit entre eux ;
détecter la présence d'une casserole sur la plaque de cuisson (1) sur la base du paramètre électrique détecté, en particulier à proximité du premier ou du deuxième dispositif de chauffage à induction (3, 4), de préférence lorsque ledit premier et/ou deuxième dispositif de chauffage à induction (3, 4) n'est pas alimenté par le convertisseur de commutation (16), en fermant le premier commutateur auxiliaire (30) et/ou le deuxième commutateur auxiliaire (40) et en analysant le paramètre électrique de l'oscillation amortie en question.

2. Plaque de cuisson à induction selon la revendication 1, dans laquelle le premier commutateur auxiliaire (30) est distinct du premier commutateur principal (17) ; de préférence, le premier commutateur auxiliaire (30) est un commutateur à semi-conducteur, de préférence un transistor, en particulier un commutateur à semi-conducteur de puissance, de préférence un transistor de puissance ; le deuxième commutateur auxiliaire (40) est distinct du deuxième commutateur principal (18) ; de préférence, le deuxième commutateur auxiliaire (40) est un commutateur à semi-conducteur, de préférence un transistor, en particulier un commutateur à semi-conducteur, de préférence un transistor de puissance.

3. Plaque de cuisson à induction selon la revendication 1 ou 2, dans laquelle le convertisseur de commutation (16) comprend au moins un premier commutateur de convertisseur (16a) et un deuxième commutateur de convertisseur (16b) ; et dans laquelle le premier commutateur auxiliaire (30) est distinct du premier et du deuxième commutateur de convertisseur (16a, 16b) ; le deuxième commutateur auxiliaire (40) est distinct du premier et du deuxième commutateur de convertisseur (16a, 16b).

4. Plaque de cuisson à induction selon l'une des revendications précédentes, dans laquelle le premier commutateur auxiliaire (30) comprend une première borne (30a) et une deuxième borne (30b) ; le premier commutateur principal (17) comprend une première borne (17a) et une deuxième borne (17b) ; la première borne (30a) et la deuxième borne (30b) du premier commutateur auxiliaire (30) sont distinctes de la première borne (17a) et de la deuxième borne (17b) du premier commutateur principal (17) ; en particulier, la première borne (30a) du premier commutateur auxiliaire (30) et la deuxième borne (17b) du premier commutateur principal (17) sont connectées dans un premier noeud (50) ; dans lequel le deuxième commutateur auxiliaire (40) comprend une première borne (40a) et une deuxième borne (40b) ; le deuxième commutateur principal (18) comprend une première borne (18a) et une deuxième borne (18b) ; la première borne (40a) et la deuxième borne (40b) du deuxième commutateur auxiliaire (40) sont distinctes de la première borne (18a) et de la deuxième borne (18b) du deuxième commutateur principal (18) ; en particulier, la première borne (40a) du deuxième commutateur auxiliaire (40) et la deuxième borne (18b) du deuxième commutateur principal (18) sont connectées dans un deuxième noeud (51).

5. Plaque de cuisson à induction selon l'une des revendications précédentes, dans laquelle le premier commutateur auxiliaire (30) est connecté à un premier noeud (50) situé entre le premier dispositif de chauffage à induction (3) et le premier commutateur principal (17), en particulier une première borne (30a) du premier commutateur auxiliaire (30) est connectée à la première borne (3a) du dispositif de chauffage à induction (3) dans le premier noeud (50) ; dans lequel le deuxième commutateur auxiliaire (40) est connecté à un deuxième noeud (51) situé entre le deuxième dispositif de chauffage à induction (4) et le deuxième commutateur principal (18), en particulier une première borne (40a) du deuxième commutateur auxiliaire (40) est connectée à la première borne (4a) du deuxième dispositif de chauffage à induction (4) dans le deuxième noeud (51).

6. Plaque de cuisson à induction selon l'une quelconque des revendications précédentes, comprenant une pluralité d'ensembles de condensateurs résonnants (60, 61) comprenant l'au moins un ensemble de condensateurs résonnants, en particulier un premier ensemble de condensateurs résonnants (60) et un deuxième ensemble de condensateurs résonnants (61) ; dans lequel le premier circuit résonnant (65) comprenant le premier ensemble de condensateurs résonnants (60) ; et le deuxième circuit résonant (66) comprenant le deuxième ensemble de condensateurs résonants (61) ; dans lequel le premier dispositif de chauffage à induction (3) est connecté au premier ensemble de condensateurs résonants (60) ; en particulier, une deuxième borne (3b) du premier dispositif de chauffage à induction (3) est connectée au premier ensemble de condensateurs résonants (60) ; le deuxième élément chauffant à induction (4) est connecté au deuxième ensemble de condensateurs résonants (61), en particulier une deuxième borne (4b) du deuxième élément chauffant à induction (4) est connectée au deuxième ensemble de condensateurs résonants (61) ; dans lequel le premier commutateur auxiliaire (30) est connecté d'un côté au premier dispositif de chauffage à induction (3) et d'un autre côté au premier ensemble de condensateurs résonants (60) et peut fermer le premier circuit résonant (65); dans lequel le deuxième commutateur auxiliaire (40) est connecté d'un côté au deuxième dispositif de chauffage à induction (4) et d'un autre côté au deuxième ensemble de condensateurs résonants (61) et peut fermer le deuxième circuit résonant (66).

7. Plaque de cuisson à induction selon l'une des revendications précédentes, dans laquelle le bus CC (14) est placé en amont du convertisseur de commutation (16) pour alimenter le convertisseur de commutation (16) en tension redressée ou en tension continue à convertir en tension alternative ; dans lequel le premier ensemble de condensateurs résonants (60) comprend deux condensateurs (60a, 60b), chacun d'eux ayant une borne connectée au noeud (70) connecté à la deuxième borne (3b) du premier dispositif de chauffage à induction (3), et dans lequel les autres bornes des deux condensateurs (60a, 60b) sont connectées à un rail supérieur (14a) d'un bus CC (14) et au rail inférieur du bus CC (14b), respectivement, de préférence les deux condensateurs (60a, 60b) ont la même valeur de capacité et à chacun des deux condensateurs (60a, 60b) est appliquée une tension approximativement égale à la moitié de la tension du bus CC (14).

8. Plaque de cuisson à induction selon l'une des revendications précédentes, dans laquelle le convertisseur de commutation (16) comprend un circuit inverseur, de préférence un circuit inverseur en demi-pont, placé en aval du bus CC (14), pour convertir la tension CC en une tension CA, de préférence une tension CA à haute fréquence pour alimenter au moins l'un des premiers et deuxièmes dispositifs de chauffage à induction (3, 4), de préférence l'inverseur comprenant des commutateurs de convertisseur (16a, 16b) configurés pour passer d'une basse fréquence à une haute fréquence.

9. Plaque de cuisson à induction selon l'une des revendications précédentes, dans laquelle le premier commutateur auxiliaire (30) est actionné par l'unité de commande (15) et n'est fermé que lorsque le premier commutateur principal (17) est ouvert ; dans laquelle le deuxième commutateur auxiliaire (40) est actionné par l'unité de commande (15) et n'est fermé que lorsque le deuxième commutateur principal (18) est ouvert.

10. Plaque de cuisson à induction selon la revendication 9, comprenant une unité de verrouillage (100) connectée au premier commutateur principal (17) et au premier commutateur auxiliaire (30) et fonctionnant pour éviter que le premier commutateur principal (17) et le premier commutateur auxiliaire (30) soient fermés en même temps ; l'unité de verrouillage étant connectée au deuxième commutateur principal (18) et au deuxième commutateur auxiliaire (40) et fonctionnant pour éviter que le deuxième commutateur principal (18) et le deuxième commutateur auxiliaire (40) soient fermés en même temps.

11. Plaque de cuisson à induction selon l'une quelconque des revendications précédentes, comprenant un réseau de détection (20) pour détecter un paramètre électrique, en particulier une tension ou un courant, concernant le premier dispositif de chauffage à induction (3) ou le deuxième dispositif de chauffage à induction (4) dans le premier ou le deuxième circuit résonant (65, 66) respectivement, en particulier le réseau de détection (20) est connecté au noeud (70, 80 ; 95) entre le premier dispositif de chauffage à induction (3) ou le deuxième dispositif de chauffage à induction (4) et au moins un ensemble de condensateurs résonants (60, 61 ; 62), respectivement ; le réseau de détection (20) est connecté à l'unité de commande (15) pour fournir le paramètre électrique détecté à l'unité de commande (15) .

12. Plaque de cuisson à induction selon la revendication 11, dans laquelle l'unité de commande (15) est configurée pour recevoir le paramètre électrique et pour commander le convertisseur de commutation (16) sur la base du paramètre électrique détecté ; l'unité de commande est configurée pour détecter la présence d'une casserole à proximité du premier dispositif de chauffage à induction (3) ou du deuxième dispositif de chauffage à induction (4) sur la base dudit paramètre électrique détecté lorsque le premier dispositif de chauffage à induction (3) et/ou le deuxième dispositif de chauffage à induction (4) est/sont alimenté(s) et que le premier ou le deuxième commutateur principal (17, 18) est fermé, et lorsque le premier dispositif de chauffage à induction et/ou le deuxième dispositif de chauffage à induction n'est/sont pas alimenté(s).

13. Plaque de cuisson à induction selon l'une des revendications précédentes, dans laquelle le premier dispositif de chauffage à induction (3) et le deuxième dispositif de chauffage à induction (4) ont des premières bornes respectives (3a, 4a) pouvant être connectées sélectivement à une sortie (16c) du convertisseur de commutation (16), et des deuxièmes bornes respectives (3b, 4b) connectées à un noeud commun (95) ; la plaque de cuisson (1) comprend un élément de détection (23), en particulier un capteur de courant, connecté au noeud commun (95) du premier dispositif de chauffage à induction (3) et du deuxième dispositif de chauffage à induction (4) ; l'élément de détection (23) est configuré pour détecter le courant circulant dans le premier dispositif de chauffage à induction (3) et/ou dans le deuxième dispositif de chauffage à induction (4) en fonction de la position d'ouverture/fermeture du premier commutateur principal (17), du deuxième commutateur principal (18), du premier commutateur auxiliaire (30) et du deuxième commutateur auxiliaire (40) ; en particulier, l'unité de commande (15) est configurée pour maintenir temporairement ouvert le premier commutateur principal (17) et le deuxième commutateur principal (18) ou pour éteindre le convertisseur de commutation (16) lorsque le premier commutateur auxiliaire (30) ou le deuxième commutateur auxiliaire (40) sont fermés afin de détecter le courant circulant dans le premier dispositif de chauffage à induction (3) et/ou dans le deuxième dispositif de chauffage à induction (4), respectivement.

14. Procédé de détection d'une casserole sur une plaque de cuisson à induction, dans laquelle la plaque de cuisson à induction (1) comprend : un bus CC (14) ; au moins un ensemble de condensateurs résonants (60, 61 ; 62) connecté au bus CC (14) ; un premier circuit résonant (65) comprenant un premier dispositif de chauffage à induction (3) et au moins un ensemble de condensateurs résonants (60 ; 62) connectés l'un à l'autre dans un noeud (70 ; 95) ; un deuxième circuit résonant (66) comprenant un deuxième dispositif de chauffage à induction (4) et au moins un ensemble de condensateurs résonants (61 ; 62) connectés l'un à l'autre dans un noeud (80 ; 95) ; un convertisseur de commutation (16) partagé entre le premier dispositif de chauffage à induction (3) et le deuxième dispositif de chauffage à induction (4) au moyen d'un premier commutateur principal (17) et d'un deuxième commutateur principal (18) configurés pour être actionnés par l'unité de commande (15) afin de connecter sélectivement le premier dispositif de chauffage à induction (3) et/ou le deuxième dispositif de chauffage à induction (4) au convertisseur de commutation (16) pour fournir de l'énergie sélectivement le premier dispositif de chauffage à induction (3) et/ou le deuxième dispositif de chauffage à induction (4) ;
Procédé comprenant les étapes de :
détecter un paramètre électrique concernant le premier dispositif de chauffage à induction (3) dans le premier circuit résonant (65), de préférence un courant traversant le premier dispositif de chauffage à induction (3) ou une tension en un point du premier circuit résonant (65), lorsque le premier dispositif de chauffage à induction (3) n'est pas alimenté par le convertisseur de commutation (16), et un premier commutateur auxiliaire (30), distinct du premier commutateur principal (17), ferme le premier circuit résonant (65) de manière à ce que l'ensemble de condensateurs au moins résonants (60 ; 62) est connecté au premier dispositif de chauffage à induction (3) au moyen du premier commutateur auxiliaire (30) et qu'une oscillation amortie se produit entre eux ;
pour détecter un paramètre électrique concernant le deuxième dispositif de chauffage à induction (4) dans le deuxième circuit résonant (66), de préférence un courant traversant le deuxième dispositif de chauffage à induction (4) ou une tension en un point du deuxième circuit résonant (66), lorsque le deuxième dispositif de chauffage à induction (4) n'est pas alimenté par le convertisseur de commutation (16), et un deuxième commutateur auxiliaire (40), distinct du deuxième commutateur principal (18), ferme le deuxième circuit résonant (66) de manière à ce que l'ensemble de condensateurs au moins résonants (61 ; 62) est connecté au deuxième dispositif de chauffage à induction (4) au moyen du deuxième commutateur auxiliaire (40) et qu'une oscillation amortie se produit entre eux ;
détecter la présence d'une casserole sur la plaque de cuisson (1) sur la base du paramètre électrique détecté, en particulier à proximité du premier ou du deuxième dispositif de chauffage à induction (3, 4), de préférence ledit premier et/ou deuxième dispositif de chauffage à induction (3, 4) n'est pas alimenté par le convertisseur de commutation (16) en fermant le premier commutateur auxiliaire (30) et/ou le deuxième commutateur auxiliaire (40) respectifs et en analysant le paramètre électrique de ladite oscillation amortie.

15. Procédé de la revendication 14, dans lequel le premier commutateur auxiliaire (30) est un commutateur à semi-conducteur, de préférence un transistor, en particulier un commutateur à semi-conducteur de puissance, de préférence un transistor de puissance ; le deuxième commutateur auxiliaire (40) est distinct du deuxième commutateur principal (18) ; le deuxième commutateur auxiliaire (40) est un commutateur à semi-conducteur, de préférence un transistor, en particulier un commutateur à semi-conducteur, en particulier un transistor de puissance.
